# EUROPEAN PATENT APPLICATION

(11) **EP 1 629 958 A1**
(43) Date of publication of application: **01.03.2006**
(21) Application number: 04020526.2
(22) Date of filing: 30.08.2004
(51) Int. Cl.: B29C 47/76

(54) **Barrel processor having a degassing means**

(71) Applicant: Plastik Textile S.p.a., 24061 Albano S. Alessandro (Bergamo) (IT)
(72) Inventor: Cattaneo, Gianangelo, Scanzorosciate, Bergamo (IT); Ponzielli, Giuseppe, 21033 Cittglio (VA) (IT)
(74) Representative: Ritscher, Thomas

(57) **Abstract**

A processor (1) for a molten polymer composition comprises at least one screw (10) rotatably arranged within an enclosure (11) having an inner wall (12) fitting the at least one screw in a portion, at least, of the enclosure; the processor comprises a means (14) for degassing said molten polymer; the means for degassing comprises at least one ram (14) for reciprocating movement for displacement between a first (FP) and a second (SP) position; the ram has a front face (143) shaped in conformity with the inner wall of the enclosure in the fitting portion thereof; the front face of the ram forms part of the inner wall in the fitting portion of the enclosure when the ram is in the first position (FP) and provides an opening (121) of the inner wall when in the second position (SP); the ram has a passage (144) for connecting the opening of the wall with a degassing outlet (16) when in the second position (SP).

## Description

### Background of the invention

The present invention generally relates to processing machinery of the type known as a barrel processor, i.e. an apparatus used for many types of processing of viscous materials, e.g. polymers in a plasticated state, and having an elongated cavity for receiving at least one rotor, e.g. a screw. Extruders of the single or double-screw type are typical examples of such barrel processors.

More specifically, the invention relates to a barrel processor of the type which is suited for processing of molten polymer compositions and includes at least one degassing means, i.e. a device or "port" for removing steam or other gaseous components that accumulate within the barrel processor and are generated by the processed material upon heating, e.g. when processing a thermoplastic polymer composition including or not additives, fillers and other components conventionally used in polymer compositions for extrusion, molding, coating, and other processing methods.

Generally, degassing or "venting" techniques in the processing of polymer compositions rely on the exposure of a melt to a pressure which is equal or lower than ambient or atmospheric pressure (i.e. absolute pressures ranging between zero and about 1000 mbar). The need for degassing a viscous fluid, e.g. a polymer melt, may be due to residues of humidity or low boiling fractions, e.g. oligomers in the processed material, and the fact that such gasses should be eliminated, either to avoid polymer degradation or simply to optimize the extrudate quality.

### Prior Art

It is known in the art that the efficiency of the degassing method depends on several parameters, such as diffusion rates, the extent of the gas/melt interface, the pressure differential, thickness of the melt, etc.

Conventionally, barrel processors designed for degassing include at least one degassing means or port, generally an opening for connecting the cavity of the processor with the atmosphere, or with a suction device for removing gaseous components that are formed in the cavity, e.g. water vapour or gaseous decomposition products generated from the processed material or its components. Examples of advanced prior art ports suitable, inter alia, for degassing are disclosed in EP 0 907 492 and EP 1 419 041. More conventional devices are those of the type disclosed, for example, in US 4 722 680.

Typically, degassing or venting of a barrel processor is achieved along a melt conveying section but in a melt-sealed zone where the filling factor of the screw channel Φhas been designed such as to be smaller than unity when in operation. When the filling factor Φ is equal to unity, the screw channel is completely filled with molten material, and no significant degassing could be achieved there in lack of a significant interface between the melt and gas. In fact, when the filling factor approaches unity the interfacial area melt-gas approaches zero. Moreover in this latter case melt would tend to intrude into any venting aperture in the wall of the barrel and cause complete obstruction of the aperture.

However, even if the venting section has been designed so as to guarantee a filling factor Φ « 1 throughout operation, it may happen that some molten material remains at or near the venting aperture and obstructs or prevents degassing, notably when it has a chance to accumulate. The entity termed Φ in the art is a factor dependent upon the ratio of melt volume to the "screw-free" volume in a given region of a screw ― herein the screw portion adjacent the venting port(s) - where the screw-free volume is the barrel cavity volume less the screw volume, and the melt volume is the volume occupied by the melt without the screw volume. When the melt volume equals the screw-free volume, then Φ = 1; when the melt volume is less than the screw-free volume, then Φ < 1. As an example, assuming that the screw-free volume of a screw adjacent a venting port and over two turns (one turn corresponds to the helical path required to pass from the beginning of one pitch to the beginning of the subsequent pitch down the screw channel) is 100 cm³ and the melt volume is 100 cm³ too, the screw channel adjacent the venting port(s) is full and Φ = 1 (unity). If the screw-free volume is about 100 cm³ and the melt volume is only about 25 cm³, then Φ = 0.25 and the screw channel is relatively empty. Preferably, according to the invention, Φ < 0.1, i.e. Φ <<1.

The problems of maintaining clean the venting port area with prior art devices even when Φ <<1 are due to the drag flow mechanism which becomes temporarily "blinded" during the short interval when melt passes in front of the venting aperture, and even more recent proposals, e.g. as disclosed in US 6 302 572 or EP 822 055, have not fully resolved this problem in that even a small melt deposit may become a problem for the quality of the extrudate because melt particles tend to become degraded after a certain time as a consequence of extended exposure to processing temperatures, and some drops of the melt may re-enter the extrusion melt stream if carried away, e.g. by a flank of the screw flight flank when passing in front of the venting port. Both of these effects may act in combination, and result in severe contamination of the melt and decreasing extrudate quality to the point of product rejection. Further, even a very low rate of accumulation may eventually clog and block the venting aperture, after a certain processing time, and cause an avalanching contamination effect or machine down-time for cleaning.

The disadvantages of these effects have been recognized in the art but all previous attempts to avoid them (e.g. US 4,722,680) have not been completely effective, and no structurally simple yet operationally safe and effective degassing means have become known to date.

### Objects and Summary of the Invention

Accordingly, it is a primary object of the invention to provide for a barrel processor which does not only provide for complete avoidance of clogging or residue formation art or near the venting aperture but which additionally does so by means of a most simple design.

Now, according to a first general embodiment, the invention provides for a barrel processor as specified in claim 1, i.e. having an elongated cavity extending in longitudinal and, preferably, in an essentially horizontal direction, and housing at least one screw which fits in said cavity at least in a portion thereof; according to the invention, a degassing means is provided which includes at least one ram device for reciprocating motion between a first (FP) and a second (SP) position along an axis that intersects with the longitudinal axis of the screw, and wherein the ram device has a front face shaped in conformity with the inner wall of the elongated cavity. In operation, the front face of the ram device forms part of the inner wall of the cavity as long as the ram device is in the first position (SP) while providing an opening of the inner wall when the ram device is in the second position (FP) for connecting the opening of the wall by a passage with a degassing outlet.

According to a second general embodiment, the invention provides a ram device for use as a degassing means of a processor for a molten polymer composition. The ram has a front face shaped to conform to a portion of the inner wall of the processor's cavity and actually forms part of the inner wall of that cavity when in the first position (FP). When the ram device is in its second position, its front face is removed from the cavity's wall so as to leave an opening when in the second position (SP) and so to form a connection between that opening and a degassing outlet.

According to a third embodiment, the invention provides a method of degassing a molten polymer composition in a barrel processor comprising at least one screw rotatably arranged within a cavity having an inner wall fitting the screw, or screws, in a portion, at least, of the enclosure; the processor is connected with at least one ram device for reciprocating movement between a first and a second position; the ram device has a front face shaped in conformity with the inner wall of the enclosure; the front face of the ram device forms part of the inner wall when the ram device is in the first position, and provides an opening of the inner wall when in the second position; the ram connects the opening of the wall with a degassing outlet when in the second position; according to the method of the invention, the front face of the ram device is held in the first position for a first period of time, and temporarily held in the second position for removing gas from the molten polymer composition through the degassing outlet.

### Preferred Embodiments and Definitions

Typically, the ram includes a stationary outer member, a movable inner member and a drive for causing alternating motion of the movable member between the first, or closing, and the second, or venting, position. Typically the outer member is a cylinder while the inner member is an essentially cylindrical piston. The front face of the piston is shaped so as to form an essentially continuous and smooth portion of the inner wall of the cavity without any significant interruption, i.e. be essentially "chink free". This implies both the best possible fit of the piston within the cylinder, in the area of the front face, at least, as well as preclusion of any rotation of the piston around its axis of motion.

According to a preferred embodiment, the ram is provided with a device, such as a "loading cell" or pressure sensor for signaling a pressure exerted by molten polymer composition on the ram's front face when in the first or closing position. Conventional control means can then be used to prevent that the front face of the ram is moved into the second or opening position when melt is accidentally being moved by the screw past the ram's front face.

According to a further preferred embodiment, the processor is provided with at least two ram devices operated alternately so that one ram's front face is in first or closed position when the other ram is in second or open position

The term "processor" as used herein is intended to refer to any type of apparatus having an elongated cavity that holds at least one rotor capable of causing motion of a material through the cavity from an inlet end to an exit end thereof. To that effect, the rotor is provided in a portion, at least, of the length of the cavity with screw-type elements fitting into the cavity.

The rotor may include conveying or non-conveying helical portions upstream and/or downstream of the degassing device. However, at or near the degassing means, a conveying portion of the screw should be provided in a fitting arrangement, and the filling factor should be less than unity to ascertain satisfactory operation.

The term "fitting" is intended to refer to such fit that the peripheral flight ends of the screw have a clearance of typically from about 0.001 ― 5 mm, preferably not more than about 1 mm.

The term "polymer composition" as used herein is intended to refer to a generally thermoplastic composition of the type commonly processed by means of barrel processors, typically of the extruder type having one or two screws for co-rotational or counter-rotational operation, or even more screws like, for a non limiting example, the planetary extruder or the ring extruder, which are well known in the extrusion art.

The term "ram device" as used herein is intended to refer to a device of the piston-and-cylinder type for reciprocal back and forth motion of the piston element under the impact of a drive which may be pneumatic, mechanical, hydraulic, electric, or magnetic, between two end positions.

According to the invention, the ram device has a closed front face shaped in conformity with the cavity wall so as to form a smooth, i.e. un-interrupted portion when in "closed" (i.e. non-venting) or "first" position. It is exposed to the action of the screw flights which ― at least in the portion of the degassing means according to the invention ― are "fitting" as explained above.

Obviously, the piston element of the ram device must not be allowed to rotate around its own displacement axis because even a small rotation would result in an incomplete closure of the cavity. If the front face of the ram device would not match smoothly with the wall of the cavity ― i.e. not form an essentially continuous surface with the latter as is the aim of the ram device according to the invention when in first or closed position - recesses or niches for accumulation of molten polymer composition would be formed. In the area of the front face, clearance between piston and cylinder preferable is below about 0.1 mm, e.g. in the range from 0.001 ― 0.01 mm or even lower.

Depending on the screw speed, the screw flight should pass along the front face of the ram device at least once within a cycle, i.e. between any two movements of the ram between first and second position. In practice, with typical screw speeds, e.g. in the order of 60 RPM = 1 RPS, and with realistic ram frequency values of 5 seconds per cycle, at least five passages of a screw flight, per principle, over the front face of the ram device will normally occur during each cycle. According to this example a two-principle screw will have at least 10 passages of a screw flight during 5 seconds.

Preferably, flight clearance in the scraping area is small, i.e. is in line with the definition of "fitting" as defined above. The term "degassing outlet" (also sometimes referred to as "venting port") is intended to refer to a gas-passing connection between the cavity of the processor and the ambient atmosphere or an area of reduced pressure for receiving gas formed or contained within the cavity of the processor. Typically, it includes a passage that is closed by the piston element of the ram device when in its first position but is open when in its second position.

The phrase "about" when used herein is intended to refer to a deviation of ± 50% of the value preceded by "about".

Generally, the present invention provides a system to remove any melt at the degassing device or port of the barrel and feeding it back to the screw. By using either a high-frequency or short-cycle operation of the ram device, or ― preferably ― by using at least two ram devices for alternating operation so that one ram device is in open position while the other is in closed position, the venting function can be made continuous in effect. According to the invention, the venting port can be safely protected against any melt intrusion that endangers conventional degassing means upon interruption of the process, e.g. upon a breakdown of the line, operator's mistakes and the like.

Preferably, the axis of the path of ram operation intersects with the axis of the adjacent screw at an acute angle, preferably 90°, but intersection is not believed to be essential as a matter of principle but one of simplicity of structure.

Generally, the position of a degassing device according to the invention along the length of the screw is dependent upon many process parameters but can be selected in accordance with well known requirements for conventional degassing devices. With the preferred arrangement of two ram devices for alternating operation and the resulting continuous degassing, the ram devices of a pair are arranged opposite to each other.

Also, the low pressure or "vacuum" conditions for degassing can be selected in accordance with the operation of conventional devices; e.g. operating at an absolute pressure of 20 to 10 mbar or less. It is well known to those experienced in the art that the achievable "vacuum" depends on the gas volume fraction to be removed as well as on the available vacuum pump. Especially when "high vacuum" (i.e. a very low absolute pressure) is needed, the venting section of the extruder should be melt-sealed both upstream as well as downstream in the screw channel.

A ram device according to the invention may additionally be adapted for controlling various operating parameters, e.g. provided with heating means to avoid that the polymer-contacting front face of the ram devices is cooled excessively when in its second or open position. Such a heating system may also be advantageous for optimizing the clearance between the piston element and the cylinder of the ram device for its reciprocating motion. In fact, by properly adjusting the temperature of the ram device relative to the barrel temperature, thermal expansion of the piston element of the ram device can be controlled as desired. Optimum conditions may be found for any given set of parameters by means of a few simple tests.

As briefly mentioned above, another advantageous auxiliary controlling device for the invention is a pressure sensitive transducer applied to the rear part of the piston element of the ram to detect any melt pressure when the front face is in its first position. For example, the signal from the loading cell/s may be suitably analyzed and used to control that motion of the piston element that is blocked except when the melt pressure is zero.

Operation of gas removal and gas treatment can be effected in any conventional manner. To simplify reference, the first digit of any reference in the drawings refers to the number of the corresponding figure while the second and third digits are the same for the same or analogous portions of the illustration.

The invention will now be explained by way of illustration and not limitation with reference to the enclosed drawings in which:
Figure 1A is a diagrammatic cross-sectional view of a barrel processor according to the invention for degassing with a ram device and with a single screw, as viewed in a plane that is perpendicular relative to the longitudinal axis of the screw;
Figure 1B is another cross-sectional view of the barrel processor shown in Fig. 1A but viewed in a plane that extends through the longitudinal axis of the barrel processor;
Figure 2 is a cross-sectional view analogous to Fig. 1A, the view but illustrating a first alternative to provide two ram-type venting devices on a single-screw extruder according to the invention;
Figure 3 is a cross-sectional view analogous to Fig. 1B illustrating a second alternative to provide for two ram-type venting devices on a single-screw extruder according to the invention;
Figure 4 is a cross-sectional view analogous to the diagram shown in Fig. 1A but for a twin-screw extruder; and
Figure 5 is another cross-sectional view analogous to Fig. 4 but for a twin-screw extruder with two ram-type venting devices in juxtaposition.

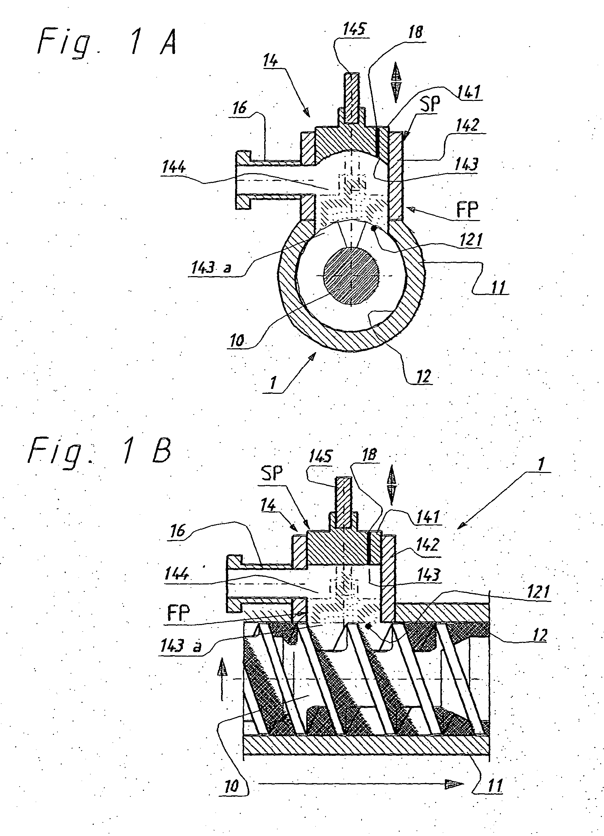

The processor or extruder 1 illustrated in Figs. 1A and 1B comprises a screw 10 fitting into the enclosure or barrel 11 which has an essentially smooth inner surface 12. Direction of rotation and material flow are indicated by lateral arrows. Only a portion of the extruder in the venting area is shown; feeding devices, drive means etc. are omitted in the drawings. Ram-type venting device 14 is formed by an outer cylindrical stationary member 142 and a piston 141 connected to a rod 145 for connection with a drive (not shown) to cause motion of piston 141 (indicated by the double arrow) between its first or closed position FP (shown in broken lines) and its second or open position SP. Venting duct 16 is provided to form a venting passage 144 which is _{"}open" - i.e. connects the interior of enclosure 11 with a source (not shown) of reduced pressure or with another means for receiving gases removed from the interior of enclosure 11 ― when piston 141 is in open position SP.

As long as piston 141 is in its "closed" position FP, the front face 143a of piston 141 forms a smoothly continuous portion 121 of the inner surface 12 of processor 1. Control means (not shown) of any conventional type are provided to actuate motion of piston 141 from its closed position FP into venting position SP. A pressure sensitive device 18, e.g. a conventional and commercially available pressure transducer is provided, e.g. a conventional Gefran© strain gauge PT type SP850 for high-temperature melt with a pressure indicating scale of from 0 to 50 or 100 bar. Sensors of this type are sufficiently fast (e.g. 4-8 ms) and reliably accurate. Such a device will prevent opening of the venting device when for some reasons melt within enclosure 12 exerts pressure onto front face 143a. Typically, a signal will be generated then to indicate to the operator that an abnormal condition exists and an appropriate action is required, e.g. rearranging the pressure drop conditions at the end of the screw etc.

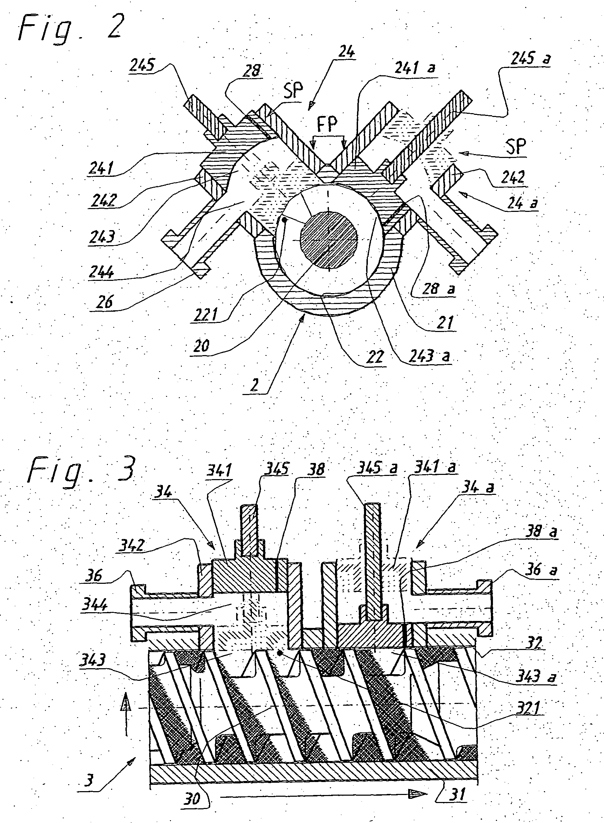

Figs. 2 and 3 are illustrations similar to the presentation of Figs. 1A and 1B. Fig. 2 illustrates an extruder 2 with a single screw 20 within an enclosure 21 as above, but with a pair of adjacently arranged ram-type venting devices 24, 24a structured as explained above but alternatingly operated so that piston 241 is in open position SP when piston 241 a is in closed position FP. This way of arranging two or more venting devices according to the invention is termed "radial displacement" relative to the longitudinal axis of the extruder.

Fig. 3 illustrates a different way of providing extruder 3 with more than one ram-type venting device in that two ram-type venting devices 34, 34a are arranged in distanced relation along the axis of screw 30 in enclosure 31. Again, operation preferably is controlled such that one venting device 34 is in open position SP when the other venting device 34a is in closed position FP. This way of arranging two or more venting devices according to the invention is termed "axial displacement" relative to the longitudinal axis of the extruder.

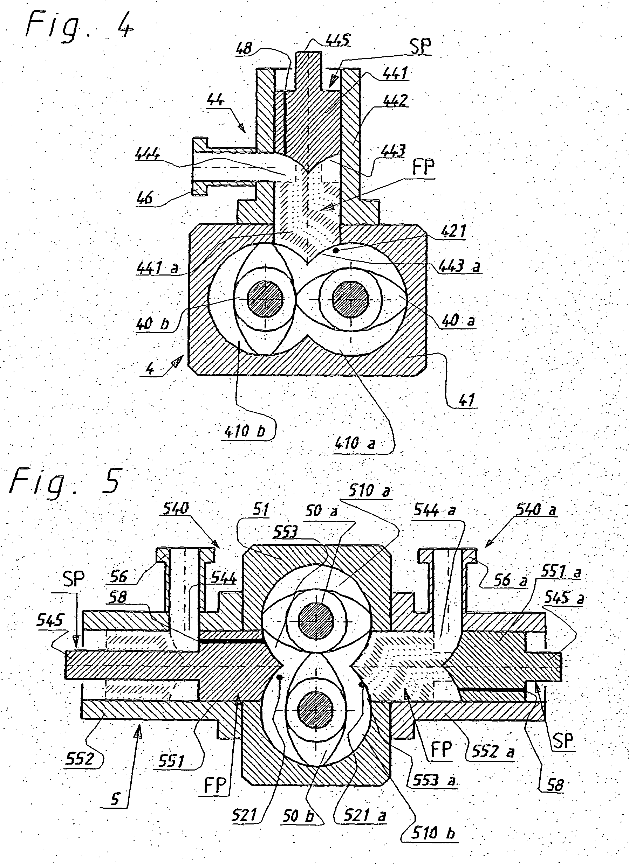

Fig. 4 illustrates an extruder 4 with two screws 40a, 40b for co-rotational or counter-rotational operation. A single ram-type venting device 44 is provided for venting both inner spaces 410a, 410b at the same time whenever piston 441 is moved from its closed position FP (indicated in broken lines) into its open position SP. Front face 443 of piston 441 is shaped to exactly complement and close inner surface 421 of enclosure 41.

Fig. 5 illustrates an extruder 5 with two screws 50a, 50b, again for co-rotational or counter-rotational operation. Two ram-type venting devices 540, 540a are provided for venting both inner spaces 510a, 510b at the same time whenever piston 551 or piston 551 a is moved from its closed position FP (indicated for piston 551a in broken lines) into its open position SP (indicated for piston 551 in broken lines). Front face 553 of piston 551 is shaped to exactly complement and close inner surface 521 of enclosure 51 whenever in closed position FP and, accordingly, front face 553a of piston 551a is shaped to exactly complement and close inner surface 521 a of enclosure 51.

As will be apparent to those experienced in the art of producing and operating extruders, embodiments of the invention set forth in the drawing are represented in a diagrammatic manner to show some preferred alternatives. Obviously, various modifications can be made, e.g. using more than two venting devices and/or combining radial and linear displacement of pairs of venting devices. Further, various operational alternatives can be used whenever pressure sensor 18, 28, 38, 48, 58 generates a signal that indicates a significant amount of molten material on the front face 143,243,343,443,553 of piston 121, 221, 321, 421, 521.

It will be understood that the above examples are meant to illustrate and not to limit the invention, and that the scope of the invention is determined by the following claims when properly construed in view of the teachings of the present invention.

## Claims

1. A processor (1;2;3;4;5) for a molten polymer composition, said processor comprising at least one screw (10;20;30;40) rotatably arranged within an enclosure (11;21,31;41;51) having an inner wall (12;22;32,42;52) fitting said at least one screw in a portion, at least, of said enclosure; said processor comprising a means (14;24;34;44;54) for degassing said molten polymer;
wherein said means for degassing comprises at least one ram device for reciprocating movement between a first (FP) and a second (SP) position;
said ram device having a front face (143;243,343;443;543) shaped in conformity with said inner wall of said enclosure in said fitting portion;
said front face of said ram forming part of said inner wall in said fitting portion of said enclosure when said ram device is in said first position, and providing an opening (121;221;321;421;521) of said inner wall when in said second position; and
said ram device forming a passage (144;244;344;444;544) for connecting said opening of said wall with a degassing outlet (16;26;36;46;56) when in said second position.

2. The processor of claim 1 comprising a means (18;28;38;48;58) for measuring a pressure exerted by said molten polymer composition on said front face when said ram device is in said first position (FP).

3. The processor of claim 1 or 2, wherein said reciprocating movement follows a path which intersects at an acute angle of up to 90° with a longitudinal axis of said at least one screw.

4. The processor of any of claims 1 ― 3, wherein said degassing means includes at least two ram devices for alternating action.

5. A ram device (14;24;34;44;54) for use as a degassing means of a processor (1;2;3;4;5) for a molten polymer composition; said ram device having a front face (143;243;343;443;543) shaped to conform to a portion of said inner wall (12;22;32;42;52) of said processor;
said front face of said ram device forming part of said inner wall when said ram device is in said first position (FP), and providing an opening (121;221;321;421;521) of said inner wall when in said second position (SP);
said ram device providing a connection between said opening of said inner wall and a degassing outlet (16;26;36;46;56) when in said second position (SP).

6. The ram device of claim 5 further comprising a means (18;28;38;48;58) for measuring a pressure exerted by said molten polymer composition on said front face when in said first position (FP).

7. A method of degassing a molten polymer composition contained in a barrel processor comprising at least one screw rotatably arranged within an enclosure having an inner wall fitting said at least one screw in a portion, at least, of said enclosure; said processor being connected with at least one ram device for reciprocating movement between a first and a second position;
said at least one ram device having a front face shaped in conformity with said inner wall of said enclosure in said fitting portion thereof;
said front face of said ram device forming part of said inner wall in said fitting portion of said enclosure when said ram is in said first position, and providing an opening of said inner wall when in said second position;
said ram device connecting said opening of said wall with a degassing outlet when in said second position;
said method comprising the step of:
moving said ram device into said first position for a first period of time and temporarily holding it there for a first period of time;
moving said ram device from said first position into a said second position for a second period of time for connecting said enclosure with said degassing outlet via said opening and for removing gas from said molten polymer composition through said degassing outlet when the filling factor Φ is less than unity, and
rotating said at least one screw when said ram device is in said first position for removing any molten polymer composition from said front face of said ram device.

8. The method of claim 7, wherein said processor comprises at least two ram devices and wherein said at least two ram devices are operated in an alternating manner.

9. The method of claims 7 or 8, wherein a signal is generated when a pressure which signals a significant presence of molten material on said front face of said ram device when in said first position FP is indicated.

10. The method of claim 9, wherein said piston(s) are controlled to retain their first position FP so as to preclude any melt flow through said wall opening whenever said signal indicates a significant presence of molten material on said front face of said ram device when in said first position.
